# EUROPEAN PATENT APPLICATION

(11) **EP 2 157 208 A1**
(43) Date of publication of application: **24.02.2010**
(21) Application number: 08021926.4
(22) Date of filing: 17.12.2008
(51) Int. Cl.: C23C 28/00, C23C 2/26, C25D 5/48

(54) **Colored acrylic coated metal substrate**

(30) Priority: 01.08.2008 US 221343; 16.10.2008 US 288105
(71) Applicant: Material Sciences Corporation, Elk Grove Village, Illinois 60007-5995 (US)
(72) Inventor: Ilk, Joseph, M., Vernon Hills 60061 (US)
(74) Representative: Hauck Patent- und Rechtsanwälte

(57) **Abstract**

A colored acrylic polymer coated metal article includes a ferrous metal substrate, and an abraded metallic coating on the substrate, wherein the abraded metallic coating has a substantially uniform patterned appearance which simulates the surface appearance of polished stainless steel. The acrylic polymer is added as a top coating, which may be relatively thick to overlie the abraded metallic coating on an obverse side of the substrate. The metallic coating may be a Zinc Nickel alloy and a pre-treatment coating may be applied beneath the top coating.

## Description

### RELATED REFERENCES

The present application is being filed as a continuation-in-part of and with a claim of priority to co-pending U.S. Patent Application Serial No. 11/205,689 to Tullis et al. filed August 17, 2005, which is a divisional application of U.S. Application Serial No. 11/074,113 to Tullis et al., now U.S. Patent No. 7,125,613, issued October 24, 2006, the disclosure of both references being hereby incorporated by reference.

### FIELD OF THE INVENTION

The present invention is directed to coated metal articles and methods of forming such coated metal. Particularly, the invention is directed to colored and coated metal sheet material which may be suitable for, but not limited to, household low temperature appliance applications, as well as in architectural, industrial food service and/or electronic equipment enclosures.

### BACKGROUND OF THE INVENTION

Many household appliances, such as ovens, ranges, refrigerators, dishwashers and the like, are manufactured utilizing "polished" stainless steel sheet material, the surface of which is abraded by one or more belts. The polished stainless steel offers important rust and corrosion resistance characteristics, and additionally affords a unique surface appearance which has been found to be highly desirable. However, stainless steel is rather expensive and may have other significant disadvantages. For example, some stainless steels are non-magnetic, which may be disadvantageous in certain applications. Also, stainless steel may have poor resistance to fingerprints, stains and/or scratches. Stainless steel may be relatively difficult to clean, and typically requires specialized tooling different from that required for other steels in order to form/stamp parts for manufacturing. The specialized tooling is at times needed due to the mechanical properties of stainless steel vs. standard cold rolled steels.

It is known to utilize other steel materials, such as cold rolled steel, which are less expensive than stainless steel, and to use treatments, such as galvanizing, to provide adequate rust/corrosion resistance. However, heretofore, it has not been possible, utilizing metals other than stainless steel, to achieve the desirable surface appearance of polished stainless steel.

One attempt to simulate the desirable surface appearance of polished stainless steel is disclosed in U.S. Pat. No. 6,440,582, which utilizes an aluminum-zinc alloy-coated steel of the type sold under the tradename Galvalume®, wherein the alloy coating is brushed and includes a particulate compound. But that product does not provide corrosion resistance comparable to that of stainless steel and the hot dip process of applying the alloy coating results in a spangle, which requires the particulate compound to counteract. Also, the product of the '582 patent, as disclosed, may not meet the visual and aesthetic requirements of most appliance manufacturers.

Another issue not addressed by prior materials is the use of color. Consumer color choices in stainless steel appliances have typically been limited. Not just tints and shades, but actual vibrant color schemes. One reason is that the addition of a color layer may hide or otherwise obscure the brushed stainless steel appearance. Another issue with such color layers is their apparent lack of suitable heat resistance for more widespread use, limiting the color-layered metal materials to cool and ambient temperature surfaces.

Thus, there is a need, generally, for a material which provides important rust and corrosion resistance characteristics of stainless steel and affords the unique surface appearance of stainless steel which has been found to be highly desirable, while avoiding the significant disadvantages of stainless steel, such as cost, non-magnetism, and poor resistance to fingerprints, stains and/or scratches. Further, a need exists for a method which permits coloring of a faux stainless steel material without detracting from or hiding the desired stainless steel appearance, and while providing at the same time a low-heat resistant material.

### SUMMARY OF THE INVENTION

There is disclosed herein an improved coated metal article and method of making same which avoids the disadvantages of prior articles and processes, while affording additional structural and operating advantages.

In particular, there is disclosed a coated metal article comprising a ferrous metal substrate, an abraded metallic coating on the substrate wherein the abraded metallic coating has a substantially uniform patterned appearance which simulates the surface appearance of polished stainless steel, and an acrylic polymer coating overlying the abraded metallic coating on one side of the substrate.

In an embodiment, the article may include an abraded electro-galvanized steel substrate, including a pre-treatment coating underlying the polymer coating.

These and other aspects of the invention can be more readily understood when considered in the conjunction with the following description of the invention and the appended drawings.

### Brief Description Of The Drawings

For the purpose of facilitating an understanding of the subject matter sought to be protected, there are illustrated in the accompanying drawings embodiments thereof, from an inspection of which, when considered in connection with the following description, the subject matter sought to be protected, its construction and operation, and many of its advantages should be readily understood and appreciated.
FIG. 1 is a diagrammatic illustration of a cross section through an embodiment of a coated metal article;
FIG. 2 is a functional block diagrammatic representation of a process of producing the article of FIG. 1;
FIGS. 3A-3E are diagrammatic views similar to FIG. 1 illustrating the article at different stages of the process of FIG. 2;
FIG. 4 is a diagrammatic illustration of one type of the apparatus utilized in the abrading step of the process of FIG. 2; and
FIG. 5 is a view similar to FIG. 4 of an alternative type of apparatus for performing the abrading step of the process of FIG. 2.

### DETAILED DESCRIPTION OF PREFERRED EMBODIMENT

While this invention is susceptible of embodiments in many different forms, there is shown in the drawings and will herein be described in detail a preferred embodiment of the invention with the understanding that the present disclosure is to be considered as an exemplification of the principles of the invention and is not intended to limit the broad aspect of the invention to the embodiment illustrated.

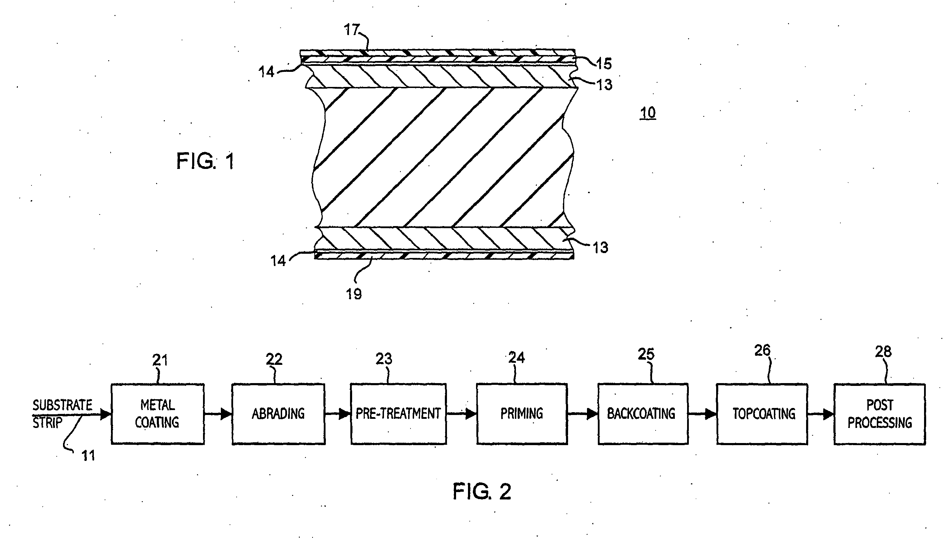

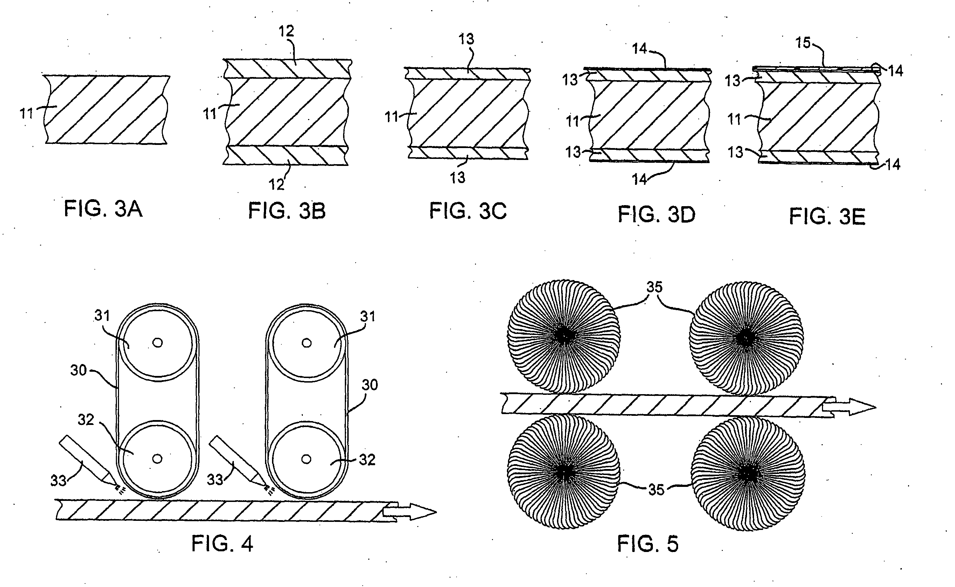

Referring generally to FIGS. 1 - 5 there is diagrammatically illustrated a preferred embodiment of a coated metal article, generally designated by the numeral 10 (FIG. 1). The article may be in the form of an elongated, continuous strip, only a portion of which is illustrated, and the strip may have an overall thickness of only a fraction of an inch, depending upon the intended application. In this regard, it will be appreciated that FIG. 1, as well as FIGS. 3A - 3E, 4 and 5, described below, are merely diagrammatic. In particular, FIGS. 1 and 3A - 3E are greatly enlarged and the illustrated relative proportions of the various layers of the material are not intended to be accurate or to scale.

The article 10 has a metal substrate 11 (FIG. 2), preferably a cold rolled steel (CRS) having a thickness in the range of from about 15 mils to about 80 mils, depending upon the intended application. The substrate is preferably free of any visual surface defects and has a matte finish with a roughness (Rₐ) which is preferably less than 30 micro-inches (µin), but may be as high as 60 µin. The thickness of the substrate 11 is limited only by the capability constraints of the processing line through which the strip is processed. It has been found that specifically designed processing lines can handle base metal thicknesses in the range of from 6 mils to 100 mils. The tensile yield requirements of the substrate 11 are specific to the end use application, depending upon the forming processes required to produce an end product and the use requirements that the end product will see during its useful life.

Both sides of the substrate 11 are provided with a metallic coating 13, which is preferably a galvanizing coating which is predominantly Zinc, and is most preferably a Zinc alloy including a percentage of Nickel. The amount of Nickel in the alloy is preferably in the range of about 7% to about 15%, with about 11% Nickel being the most preferred composition.

The outer surfaces of the metallic coatings 13 are abraded, as with polishing belts, to a predetermined substantially uniform patterned appearance having a low roughness finish. The preferred roughness (Rₐ) is less than 20 µin, and most preferably is in the range of from about 5 µin to about 10 µin. The polished outer surfaces of the metallic coatings 13 may have applied thereto a pre-treatment layer 14 which provides a clean surface for the chemical bonding of adjacent layers as well as providing additional corrosion protection. To the pre-treatment layer 14, there is applied, on the obverse or main side of the article 10, a primer coating 15, which is preferably an acrylic-based primer. Finally, to the primer coated strip, a polymeric top coating 17, which is in the form of an acrylic polymer layer, is applied. The acrylic polymer is colored in a manner which provides a vibrant colored surface. The acrylic polymer layer, preferably applied by roll coating, has a preferred thickness in the range of from about 0.2 to about 0.3 mil so as to more effectively control the final color of the product and also to greatly enhance the corrosion and chemical resistance of the article 10.

Acrylic polymer is derived from the monomer methyl methacrylate (MMA) and has many desireable characteristics. For example, acrylic is resistant to a wide range of chemicals including salts, bases, aliphatic hydrocarbons, fats and oils, most common gases and inorganic chemicals, dilute mineral and organic acids, and dilute and concentrated solutions of most alkalis.

Acrylic polymers can be prepared having suitable heat-resistance characteristics as well. Such polymers, known to those skilled in the art, have exhibited good stability in tests after 300 hours at 275° F. This heat test qualifies such polymer-coated material to be used on low heat surfaces, such as oven sides and modified oven doors.

Also, compared with other polymers, acrylic is relatively easy to process. It can be molded with little or no residual stress and is available in formulations specifically designed for injection molding or extrusion in a wide range of melt-flow rates. These characteristics make acrylic an ideal top-coating for the article 10.

The color is created using materials suitable for such purposes, all of which are known to those skilled in the art. Many color choices are suitable for coloring the acrylic polymer layer.

Preferably, on the reverse side of the article 10, there is applied to the optional pre-treatment layer 14 a clear or tinted backer coating 19, which is preferably a polyester clear coat or other polymer as required to perform functionally or aesthetically, depending upon the end product.

Referring now to FIGS. 2 and 3A - 3E, there is illustrated a process for producing the colored and coated metal article 10 of FIG. 1, as well as variants thereof. Initially, the substrate 11 undergoes a metal coating step at 21. The strip 11 may be fed from a continuous roll of material, the width of the strip being limited only by the capabilities of the processing line or lines through which it is to be fed. Lines which accommodate widths up to 72 inches are known in the art. Preferably, in the metal coating step 21, the metallic coating is applied to the substrate 11 by electro-deposition. However, as an alternative method, a hot dip process could also be utilized, depending upon the nature of the coating material and the intended application of the product.

In forming the coated metal article 10 of FIG. 1, the CRS substrate 11 (FIG. 3A) undergoes an electro-galvanizing step for applying the Zinc Nickel alloy coating 12 to both sides of the substrate (FIG. 3B). In the electro-galvanizing line the substrate is cleaned and coated with the Zinc Nickel alloy to an applied weight in the range of approximately 40-50 grams per square meter (g/m²) per side of metal surface area. The Zinc in the galvanizing coating provides corrosion resistance in a known manner. The Nickel component of the coating gives slightly improved corrosion resistance as well as increased hardness to the metallic coating and has been found to produce an appearance which is desirable in more closely simulating the surface appearance of certain polished stainless steels. Upon completion of the metal coating step 21, the resulting product is an electro-galvanized substrate as illustrated in FIG. 3B.

This electro-galvanized CRS substrate is then passed through an abrading step 22. Referring to FIG. 4, this abrading is preferably performed by one or more continuous polishing belts 30. The belts 30 may vary in number from one to several, depending upon the amount of material to be removed. While belts are illustrated in FIG. 4 on only the obverse side of the strip, it will be appreciated that they could also be used on the reverse side if the material is to be abraded on both sides. Since the abrading step is important in achieving the final appearance of the finished product, in many applications only the obverse side would be visible in use and, therefore, it may be necessary to provide abrading on only that surface. In FIG. 4, two belts are illustrated, each being entrained around upper and lower rollers 31 and 32, at least one of which is powered for rotation about its axis. Preferably, the areas of contact between the belts and the moving strip are flooded with a lubricant liquid, such as water, which may be applied through nozzles 33. This not only provides flushing of the surface to remove particulates, but also minimizes sticking or chatter between the belts and the moving strip of material.

The abrading or polishing, in addition to achieving a desired surface appearance, also tends to remove material from the metallic coating 12, resulting in the abraded metallic coating 13, as seen in FIG. 3C, which is thinned in comparison with the original metallic coating 12 (FIG. 3B). While initially the metallic coating 12 is applied at a minimum weight of 40 g/m² per side, typically in the range of 40-50 g/m², the polishing tends to remove approximately 20-30 g/m². Accordingly, a preferred embodiment of the polished metallic coating 13 will have a weight of preferably about 15 g/m² and most certainly in the range of from about 15 to about 25 g/m² of surface area. This will ensure that the polished coated substrate will maintain adequate corrosion protection. The polishing must also be effected to a degree to achieve a roughness (Rₐ) which is no greater than about 20 µin and preferably in the range of from about 5 to about 15 µin. The polishing may be varied to achieve these desired parameters by varying the number of belts, the belt pressure, the line speeds and the grit number of the belts. Also, the polishing parameters may be changed to give different visual appearances, as desired.

The foregoing parameters are those desired for applications in certain appliances such as, for example, oven sides and doors. However, there may be applications which have less demanding specifications, either because they do not require as accurate a simulation of the appearance of polished stainless steel or perhaps do not require the same level of corrosion protection. For such applications, it may be possible to perform the abrading step 22 utilizing brushes 35 (FIG. 5) similar to those used in forming polished stainless steel. The use of such brushes on either one or both sides of the substrate tends to result in a less uniform surface appearance, which may include some waviness, and a certain amount of chatter may occur between the brushes and the moving strip of substrate 11. The resulting roughness (Rₐ) is typically greater than 20 µin.

After the abrading step 22, the abraded metallic coated substrate of FIG. 3C undergoes a pre-treatment step 23 for applying, preferably, a complex oxide-based and/or chrome-containing pre-treatment, or non-chrome alternative, which may be applied to one or both surfaces of the substrate via dip tank or coating rolls to prepare the surface of the abraded metallic coating 13 and make it more receptive to bonding of adjacent layers. This pre-treatment layer is designated 14 in FIG. 3D, and may be extremely thin. The pre-treatment may, depending on the type of treatment chosen and the amount applied, have the effect of changing the apparent color of the surface slightly.

The strip may also undergo a back coating step 25, in which there may be applied to the reverse surface of the strip a clear or tinted backer coating 19 (FIG. 1), such as a polyester coating, to complete the coated metal article 10. This coating is preferably applied to a thickness in the range of from about 0.10 to about 0.30 mil. It is typically not visible and tinting may or may not be used. An epoxy- or acrylic-based backer coating may be used in lieu of the polyester coating.

After the back coating step 25, if used, the strip undergoes a top coating step 26. In this step, there is applied to the obverse face of the strip a colored acrylic polymer coating 17 (FIG. 1), which is applied to a thickness in the preferred range of from about 0.2 mil to about 0.3 mil. This is comparable with general coating standards and permits effective control of final color of the exposed surface. The acrylic polymer coating 17, which includes a coloring as explained above, serves to provide enhanced corrosion resistance as well as refining the finished surface appearance of the strip to most closely resemble the surface appearance of the particular polished stainless steel being simulated.

If desired, the coated metal article 10 may undergo post processing, as at 28, which may include any of a number of different processing steps, such as supplying a protective strippable liner to the obverse surface of the strip, slitting of the strip, re-rolling of the strip, cutting into discrete sheets, and final shipment to a customer.

While, in the metal coating step 21, a Zinc-Nickel alloy is preferably applied, as described above, it may be possible, for certain applications, to galvanize the substrate 11 utilizing a Zinc-only coating. The use of the Zinc Nickel coating is preferred because it gives somewhat improved corrosion protection as well as increased hardness. However, because of the additional corrosion protection afforded by the acrylic polymer coating 17, the use of Nickel may not be necessary. This would improve economy, since a Zinc-only coating would be slightly less expensive. The Zinc-only galvanized material also has a slightly different appearance, and could be used in simulating the appearance of different stainless steels. For example, a Zinc only coating could be used in simulating a 400-series stainless steel, while a Zinc-Nickel coating could be used to simulate a 300-series stainless steel.

While electro-deposition of a Zinc-Nickel coating is preferred, it may also be possible to use aluminized or hot dip galvanized substrates, depending upon the application. However, the aluminized coating has a different appearance from a Zinc galvanizing coating, which may be undesirable. The use of a hot dip process for applying a Zinc galvanizing coating may be somewhat less expensive than electro-deposition, but tends to result in a surface spangle, which must either be removed, or an operation must be performed to mask the spangle.

In the pre-treatment of step 23, the pre-treatment may be applied by a roll-on technique to produce good corrosion and color results. It is also possible to use a dip tank treatment or to pre-treat the strip with either a chrome-containing treatment or, in certain applications, a non-chrome containing treatment.

There could also be applied to the pre-treatment layer 14 on the obverse side of the strip a polymeric top coat in the form of a tinted polyester clear coat, which may be applied to a dry film thickness in the range of from about 0.5 mil to about 0.6 mil. While this thin polyester top coat may have a higher pencil hardness, which might be desirable in certain applications, it does not provide the same level of corrosion protection as the acrylic polymer coating and may make it more difficult to control color. Alternatively, the thin polymeric top coat could be an epoxy or acrylic coating.

Four colored acrylic polymer coated metal substrates (Gray, Orange, Red and Blue) were prepared as set forth in TABLE I. The same sample substrates were run through various physical tests, the test method, standards and results of which are set forth in TABLE II below.

**TABLE I:**

| **Colored Examples** | | | | | |
|---|---|---|---|---|---|
| Property | | Gray | Orange | Red | Blue |
| Substrate | Grade: | DS Type B | | | |
| | Yield Strength: | 26 ksi (179 Mpa) | | | |
| | Tensile Strength | 44 ksi (303 Mpa) | | | |
| | Elongation, % | 44% | | | |
| | Surface Hardness | 37 R_{b} | | | |
| | n-Value | 0.23 | | | |
| | Rₘ | 1.7 | | | |
| Dry Film Thickness | DJH Paint Drill | | | | |
| | Primer: | 0.2 - 0.3 mil | 0.2-0.3 | 0.2 - 0.3 | 0.2-0.3 |
| | Top Coat: | 0.5 - 0.6 mil | 0.5-0.6 | 0.5 - 0.6 | 0.5-0.6 |
| | Total: | 0.7 - 0.9 mil | 0.7-0.9 | 0.7-0.9 | 0.7 - 0.9 |

**TABLE II-Test Results**

| TEST | METHOD | GRAY | | | ORANGE | | | RED | | | BLUE | | |
|---|---|---|---|---|---|---|---|---|---|---|---|---|---|
| Gloss | 60° | 80 % minimum | | | 80 % minimum | | | 80 % minimum | | | 80 % minimum | | |
| Flexibility | T-Bend | 1-T No TPO | | | 1-T No TPO | | | 1-T No TPO | | | 1-T No TPO | | |
| Pencil Hardness | | H minimum | | | H minimum | | | H minimum | | | H minimum | | |
| Adhesion | 1/16^{th}" Cross Hatch | 4B | | | 4B | | | 4B | | | 4B | | |
| UVA | **Note** 1 | ΔL | Δa | Δb | ΔL | Δa | Δb | ΔL | Δa | Δb | ΔL | Δa | Δb |
| | | -0.06 | -0.11 | 0.32 | 0.06 | -0.17 | 0.01 | -3.31 | -0.11 | 0.32 | -3.71 | -9.07 | -2.75 |
| Water Vapor | **Note 2** | Moderate Blush | | | -0.37 | 0.06 | -0.14 | -2.2 | -2.74 | -1.37 | -0.41 | 0.88 | 1.55 |
| Humidity | **Note 3** | B 10, | R | 1/32 6 | Not Tested | | | Not Tested | | | Not Tested | | |
| | | -0.06 | -0.01 | 0.15 | | | | | | | | | |
| Salt Spray | **Note 4** | B 9-8 | | | Not Tested | | | Not Tested | | | Not Tested | | |
| | | Dark Spots | | | | | | | | | | | |
| | | B 3/32 | 4, | R 2/32 0 | | | | | | | | | |
| Heat Resistance | **Note 5** | -0.43 | -0.04 | 1.38 | -0.52 | 0 | 0.26 | -0.8 | -0.54 | -0.77 | -0.46 | -0.26 | 3.26 |
| Taber Abrasion | **Note 6** | 14.1 mgs | | | 15.2 mgs | | | 10.6 mgs | | | 13.9 mgs | | |
| Grease Resistance | 500 hours Hardness, Initial/Final | No Stain | | | No Stain | | | No Stain | | | No Stain | | |
| | | 3H/3H | | | 4H/3H | | | 3H/3H | | | 3H/3H | | |
| | **Note 7** | | | | | | | | | | | | |
| | Bleach | No Stain | | | No Stain | | | No Stain | | | No Stain | | |
| | Liquid ALL | No Stain | | | No Stain | | | No Stain | | | No Stain | | |
| | Spray 'n Wash | Very Slight Stain, B | | | Very Slight Stain, B | | | No Stain | | | Very Slight Stain, B | | |
| | Black Shoe Polish | No Stain | | | No Stain | | | No Stain | | | No Stain | | |
| | Ammonia | No Stain | | | No Stain | | | No Stain | | | No Stain | | |
| | Ketchup | No Stain | | | No Stain | | | No Stain | | | No Stain | | |
| | Chocolate Syrup | No Stain | | | No Stain | | | No Stain | | | No Stain | | |
| | Strong Coffee | No Stain | | | No Stain | | | No Stain | | | No Stain | | |
| | Joy Dishwashing | No Stain | | | No Stain | | | No Stain | | | No Stain | | |
| | 50% lard/50% oleic | No Stain | | | No Stain | | | No Stain | | | No Stain | | |
| | Lemon juice | No Stain | | | No Stain | | | No Stain | | | No Stain | | |
| Stain Tests | Mustard | No Stain | | | No Stain | | | No Stain | | | No Stain | | |
| | Vinegar | No Stain | | | No Stain | | | No Stain | | | No Stain | | |
| | French Dressing | No Stain | | | No Stain | | | No Stain | | | No Stain | | |
| | Cone. Orange Juice | No Stain | | | No Stain | | | No Stain | | | No Stain | | |
| | Cranberries, jellied | No Stain | | | No Stain | | | No Stain | | | No Stain | | |
| | Spaghetti Sauce w/ | | | | | | | | | | | | |
| | Meat | No Stain | | | No Stain | | | No Stain | | | No Stain | | |
| | Liquid Cascade | No Stain | | | No Stain | | | No Stain | | | No Stain | | |
| | Soft Scrub Cleanser | No Stain | | | No Stain | | | No Stain | | | No Stain | | |
| | Windex | No Stain | | | No Stain | | | No Stain | | | No Stain | | |
| | Fantastik Cleaner | Very Slight Stain | | | Very Slight Stain | | | No Stain | | | No Stain | | |
| | Butter slated | No Stain | | | No Stain | | | No Stain | | | No Stain | | |
| | 1% citric acid | No Stain | | | No Stain | | | No Stain | | | No Stain | | |
| | Lipstick, Red | No Stain | | | No Stain | | | No Stain | | | No Stain | | |
| | 0.5% NaOH | No Stain | | | No Stain | | | No Stain | | | No Stain | | |
| | Tea | No Stain | | | No Stain | | | No Stain | | | No Stain | | |
| | Turmeric in oil | No Stain | | | No Stain | | | No Stain | | | No Stain | | |
| | Curry in oil | Slight Stain | | | Slight Stain | | | Slight Stain | | | Slight Stain | | |
| | Chili powder in oil | Slight Stain | | | No Stain | | | No Stain | | | No Stain | | |

| | | | | | | | | | | | | | |
|---|---|---|---|---|---|---|---|---|---|---|---|---|---|
| **Note 1**- Illuminant F, 10° Observer 8 hr UV @ 70° C + 4 hr con @ 50° C 500 hours, deltas < 1.5 **Note 2** - 168 hours @ 170° F. (77° C) **Note 3** - ASTM D - 2247 1000 hours @ 110° F: Vertical Scribe: Deltas, L a b **Note 4** - ASTM - 117 3T, 24 hours X Scribe, 500 hours **Note 5** - Deltas <1.5, Illum. F Obs. 10° **Note 6** -100 cycles, 1000 mg, CS 10 Wheel **Note 7** - ASTM D 1308 - 87 Frigidaire Spec T -18 Whirlpool WM - 3561 | | | | | | | | | | | | | |

From the foregoing, it can be seen that there has been provided an improved colored acrylic polymer coated metal article and method of making same which effectively simulates the surface appearance of polished stainless steel while affording important advantages over stainless steel.

The matter set forth in the foregoing description and accompanying drawings is offered by way of illustration only and not as a limitation. While particular embodiments have been shown and described, it will be apparent to those skilled in the art that changes and modifications may be made without departing from the broader aspects of applicants' contribution. The actual scope of the protection sought is intended to be defined in the following claims when viewed in their proper perspective based on preceding description and any prior art.

## Claims

1. A coated metal article comprising:
a ferrous metal substrate,
an abraded metallic coating on the substrate wherein the abraded metallic coating has a substantially uniform patterned appearance which simulates the surface appearance of polished stainless steel, and
a color-tinted acrylic polymer coating overlying the abraded metallic coating on an obverse side of the substrate, through which acrylic polymer coating the substantially uniform patterned appearance is visible.

2. The coated metal article of Claim 1, wherein the metallic coating comprises a Zinc-Nickel alloy.

3. The coated metal article of Claim 2, wherein the Zinc-Nickel alloy comprises Nickel in a range of from about 7% to about 11%.

4. The coated metal article of Claim 1, wherein the color-tinted acrylic polymer coating is heat resistant to a temperature of at least 275° F.

5. The coated metal article of Claim 4, wherein the uniform patterned appearance of the abraded metallic coating remains visible through the color-tinted acrylic polymer coating after being heated to a temperature of 275° F for at least 300 hours.

6. The coated metal article of Claim 1, wherein the abraded metallic-coating has a roughness (Rₐ) less than 20 µin.

7. The coated metal article of Claim 1, wherein the acrylic polymer coating has a thickness in the range of from about 0.2 mil to about 0.3 mil.

8. The coated metal article of Claim 1, wherein the article further comprises a pretreatment layer disposed on the abraded metallic coating.

9. The coated metal article of Claim 8, wherein the pretreatment layer comprises a complex oxide-based layer or Cr-containing coating.

10. The coated metal article of Claim 1, wherein the abraded metallic coating has an applied weight greater than or equal to 15 g/m² of surface area.

11. A coated metal article comprising:
an abraded electro-galvanized steel substrate having a substantially uniform patterned appearance which simulates the surface appearance of polished stainless steel,
a pre-treatment coating on an obverse surface of the abraded electro-galvanized substrate, and
an acrylic polymer coating on the pre-treatment coating.

12. The coated metal article of Claim 11, wherein the acrylic polymer coating comprises a color tint.

13. The coated metal article of Claim 12, wherein the color tinted acrylic polymer coating is heat resistant to a temperature of at least 275° F.

14. The coated metal article of Claim 11, wherein the abraded electro-galvanized steel substrate has a roughness (Rₐ) in the range of from about 5 to about 15 µin.

15. The coated metal article of Claim 11, wherein the pre-treatment coating comprises a complex oxide-based layer or Cr-containing coating.
